Europäisches Patentamt

(19) European Patent Office   (11) Publication number: **0 096 020**

Office européen des brevets   **B1**

(12)   # EUROPEAN PATENT SPECIFICATION

(45) Date of publication of patent specification: **19.08.87**   (51) Int. Cl.⁴: **A 61 C 9/00**

(21) Application number: **83850138.5**

(22) Date of filing: **20.05.83**

(54) **Impression tray for dental purposes.**

(30) Priority: **01.06.82 SE 8203366**
**15.02.83 SE 8300828**

(43) Date of publication of application:
**07.12.83 Bulletin 83/49**

(45) Publication of the grant of the patent:
**19.08.87 Bulletin 87/34**

(84) Designated Contracting States:
**AT BE CH DE FR GB IT LI NL SE**

(56) References cited:
**DE-C- 830 092**
**DE-U-6 603 639**
**US-A-2 598 927**

(73) Proprietor: **ANDERSSON, Bror Axel Erling**
**Österängsvägen 24**
**S-142 86 Enebyberg (SE)**
(73) Proprietor: **Lindblom, Ragnvald Erik**
**Alsäter**
**S-740 10 Almunge (SE)**

(72) Inventor: **ANDERSSON, Bror Axel Erling**
**Österängsvägen 24**
**S-142 86 Enebyberg (SE)**
Inventor: **Lindblom, Ragnvald Erik**
**Alsäter**
**S-740 10 Almunge (SE)**

(74) Representative: **Maier, Eugen, Dr.-Ing. et al**
**Patentanwälte Dr.-Ing. Eugen Maier Dr.-Ing.**
**Eckhard Wolf Pischekstrasse 19**
**D-7000 Stuttgart 1 (DE)**

## Description

The present invention relates to an impression tray of plastics material for dental purposes as described in the generic part of claim 1 and is of the kind consisting of a shovel-like blade with a fixed or a removable handle, the blade being provided, at least at certain portions of its inside, with a layer of thread-shaped anchoring means forming attachments for the impression material. The impression material is usually an alginate or consists of different types of rubber compositions, silicon compositions or combinations of silicon and alginate, which are initially plastic or semi-liquid.

When a dentist takes an impression of an entire upper or lower jaw or parts thereof, he uses different types of metal or plastic impression trays. The tray is filled with plastic or semi-liquid impression material and is then put in place in the mouth. When the impression material has solidified, the tray together with the elastic, solidified impression material is removed with a jerk from the jaw. Undercutting, e.g. between certain teeth, makes it necessary to use quite a large force when the tray is to be removed. To keep the impression material on the tray, those of the prior art, as disclosed e.g. in DE—C—830092, have been provided with a coating of netlike or gauzelike metallic or fabric material. However, if the grating spaces are too small it is difficult for the impression material to penetrate into the grating spaces, whereas if the grating spaces are too large it is not possible to achieve a secure anchoring.

With the trays of the prior art it thus often occurs that the impression material loosens from the tray due to the fastening being insufficient, which in turn causes great inconvenience since the impression must be taken once again. If the impression material loosens at a place which cannot be inspected, e.g. if such loosening has taken place at a distance from the edges of the tray, i.e. under the material itself, the result can be that a bridge is made up on a model which has an error due to the impression itself having loosened without the dentist noticing this. The dentist will then have to alter large portions of his work either partially or completely, with large loss of time and inconvenience for the patient.

Another impression tray described in DE—U—6603639 is provided with a removable adhesive plaster, one side of which is impregnated and the other side is provided with a self-adhesive coating. The impression material fastened only to the surface of the impregnated side of the plaster is not in all cases secured strongly enough to the plaster to withstand the strong force exerted to the impression material when the tray being removed from the jaw.

Another impression tray described in US—A—2 598 927 consists of a flexible backing and is provided with a lining of an open mesh fabric e.g. sewed to the backing by stitch lines providing in this way sufficient space between the lining and the backing.

The object of the present invention is therefore to provide an impression tray of plastic material for disposable use, the inside of the tray being provided with thread-shaped anchoring means providing a more secure fastening between the impression material on the inside of the tray.

This is achieved with an impression tray comprising the features mentioned in the generic part of claim 1 which, in accordance with the invention, is characterized in that the filaments of the anchoring layer are non-woven and are distributed in all directions to form a porous anchoring felt mat.

In a preferred embodiment of the invention the desired result is obtained with the aid of a thin layer of fibrous elements which are very thin in relation to their length and the bottom side of which is attached to the inside of the tray. The filaments lie criss-cross and coact such that the tear strength of the material will be considerable, both in the longitudinal direction of the layer and in its transverse direction between the top and the bottom sides of the layer. In relation to the thickness of the filaments the interstices between the filaments will usually be very large. Such a layer can easily be attached to the inside of the tray, e.g. with the aid of a binding agent. Alternatively, the filament layer can be attached by pressing it directly onto the hot tray, e.g. during compression molding or vacuum molding.

After trying out the tray in the patient's mouth and possible corrections of its shape, the tray is ready to receive the impression material. When the tray is then pressed against the teeth, the impression material will be pressed with comparatively large force against the filament layer on the inside of the tray. The plastic or semi-liquid impression material thus penetrates down into the outer layer of the filament layer so that the filaments in it become effectively bedded into the impression material to form reinforcing in it, these filaments having a strong connection with the remainder of the filament layer and thereby with the filaments which are attached to closely-lying spots on the inside of the tray. Since the filament layer is suitably thin, in the order of magnitude of one or a few millimeters, the plastic or semi-liquid impression material can in most cases penetrate right down to the filaments lying in the vicinity of the inside of the tray or actually down to the inside of the tray. There is thus obtained a thin bottom layer of the impression material which is more or less in contact with the inside of the tritact with the inside of the tray and reinforced with filaments which are securely attached thereto. After solidification of the impression material and thereby its reinforced bottom layer, the material will be essentially as effectively attached to the inside of the tray as with an effective adhesion of the material to the tray in a manner known per se. The advantage with this embodiment is, however, that in relation to the known adhesion there is avoided preparing the tray with adhesive before putting on the impression material, and furthermore the inventive tray can be used for different types of impression material independent of whether these function together with a given type of adhesive.

Since it is sought, with the tray in accordance with the invention, that the semi-liquid or plastic impression material shall penetrate down into the non-woven layer as far as possible and preferably right down to the inside of the tray, it is an advantage if the filament layer has a comparatively large resistance to compression so that the interstices between the filaments are kept open as far as possible during the pressure from the semi-liquid impression material. The possibilities for the impression material to be forced inbetween the filaments of the layer are thereby increased. A suitable non-woven layer for this purpose is a type of plastics filament layer used for certain known gas filters. The plastics filaments in these gas filters are disposed in all directions. The filament thickness is very small, e.g. of the order of magnitude 5 denier and the length thereof is very large. A great number of relatively large interstices are formed between the filaments. In order to maintain the size of the interstices as far as possible, the filaments are fixed to each other at their contact points. This can be achieved in different ways. One way is to use a binder. Another way is to fuse the filaments at their intersection points, the plastics filaments then being so-called by-component plastics filaments, where one component has a lower melting point than the other. Heating to the lower melting point results in fixation at the intersection points, while the component with the higher melting point will be unaffected and retains its fibrous form. A relatively stable three-dimensional network is formed in the different cases, which is extremely suitable as a fastener for the impression material in the tray in accordance with the invention.

The basic idea in the invention is thus that the filaments will form a reinforcement in the bottom layer of the impression material adjacently inside of the tray. However, the fastening can be further reinforced by the filaments being combined with some chemical agent known per se which binds the impression material. This chemical agent can in turn be added as an impregnation of the filaments or be applied to absorbing filaments which are mixed into the network of filaments forming the reinforcement itself.

Different types of fastening means arranged on the inside of an impression tray in accordance with the invention are illustrated as examples on the appended drawings.

Fig. 1 is a schematic perspective view of a tray provided on its inside with a felt mat of filaments forming anchoring means in accordance with the invention.

Fig. 2 is a cross-section along the line 2—2 in Fig. 1.

Fig. 3 is an enlarged partial depiction of the section in Fig. 2.

Fig. 4 is a section along the line 4—4 in Fig. 3.

Fig. 5 is a schematic perspective view of a tray which is only provided at certain portions of its inside with anchoring means according to the invention, which are disposed in depressions on the inside of the tray in this case.

Fig. 6 illustrates a mat or felt of filaments, disposed in a depression in the tray according to Fig. 5.

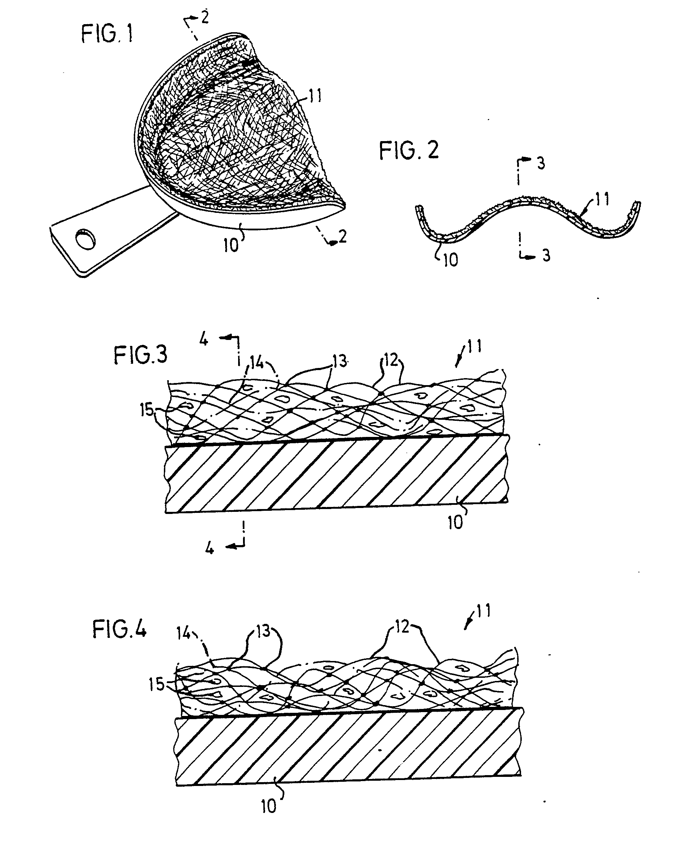

As will be seen from Figs. 1 to 4, the tray 10 is made from relatively thin plastic, since it is intended to be used only once. In the illustrated embodiment, the tray is provided with a felt mat 11 of anchoring means on its inside, the layer having a thickness suitably in the range on one to three millimeters. The anchoring means comprise thin and long plastic filaments 12 which are mixed with each other to a non-woven layer in the illustrated example, and this layer can be easily fastened to the inside of the tray in different ways, as mentioned above. For these plastic filaments to have sufficient stiffness they are suitably attached to each other at the places 13 where they intersect and are in mutual contact. The felt mat will thus be made up from a very large number of plastic filaments which have a length between their fastening points to adjacent filaments such that they form a three-dimensional network affording a certain amount of elastic resistance to compression. This type of felt mat is known per se from certain types of filter cloths for filtering liquids or gases. By fastening such a filter cloth, known per se, on the inside of an impression tray there is obtained a layer of thread-shaped, relatively stiff attachment means having the ability to resist the pressure of the plastic or semi-liquid impression material when this is put onto the impression tray and pressed into engagement against the inside thereof. The material will then penetrate through the relatively thin layer of plastics filaments so that these become embedded in the material to form anchoring means when the material has solidified. The filaments are securely attached to each other and to the inside of the tray, thereby providing secure attachment of the solidified impression material at closely-lying points, since the filaments are incorporated as an effective reinforcing element in the bottom layer of the solidified impression material.

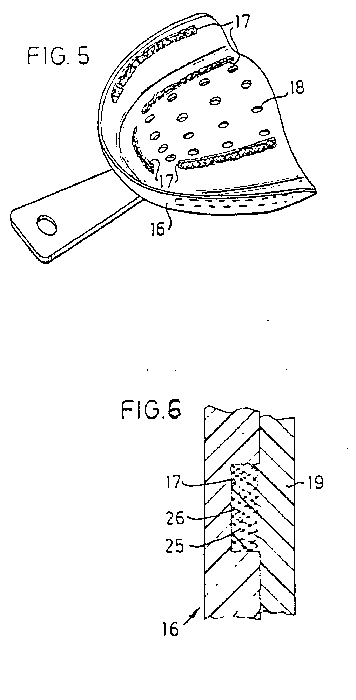

The thread-like anchoring means according to the invention can, however, be disposed in limited areas of the inside of the tray, and can then be disposed to depressions in the tray, as is illustrated in Fig. 5 and the associated section shown in Fig. 6.

In certain cases, the plastics filaments 12 in Figs. 3 and 4 can be mixed with absorbing filaments 14 as indicated by chain-dotted lines. These absorbing filaments may comprise cellulose filaments and can be impregnated with a binder coacting chemically with the plastic or semi-liquid impression material being used and bind the filaments to it when the impression material solidifies. Alternatively, the layer 11 may be coated with a low-viscosity binder before putting on the impression material, the binder either binding the plastics filaments 12 and/or the absorption filaments 14 to the impression material. Instead of the absorption filaments 14, or in combination with these, small absorption bodies 15, e.g. of cellulose particles, can be mixed into the layer 11 for filling the same function as the absorption filaments.

The described embodiment in Figs. 1—4 is cheap in manufacture. The plastic tray 10 itself may be of a known embodiment, e.g. with a removable or attached handle. A non-woven layer 11 of the type described is attached to the tray. Since the tray is of relatively thin plastics, it is usual to manufacture it by compression moulding or vacuum moulding, whereby the plastics material is heated up and relatively soft. It is therefore simple to attach the fibrous filament layer in the form of a thin felt mat which is pressed into the heated and soft plastics material of the tray so that the filaments are anchored in the plastics. Alternatively, the inside of the ready tray can be coated with a binder for gluing on the felt mat of filaments.

It is essential in the different embodiments that the filaments are relatively dense so that they form closely-lying anchoring points on the inside of the tray and that the filaments are forced to penetrate into the plastic or semi-liquid impression material to form the anchoring filaments in it. This reinforcement can be made still more secure with the aid of a binder, but normally this is not necessary to obtain satisfactory and secure anchoring of the impression material.

The plastics tray 16 of Fig. 5 is provided with a plurality of depressions 17, of which one is illustrated in section in Fig. 6.

The tray is furthermore provided with holes 18, known per se, forming the attachment for the impression material 19. The depressions have suitably the same width in relation to each other, a strip of anchoring means in accordance with the invention being fastened into the depressions with the aid of a binder.

Fig. 6 illustrates filaments 25 which cross each other to form a layer which is attached to the bottom of the depression 17 and to the inside of the tray 16. The filaments are firmly attached to each other at the intersection points 26, indicated by dots.

## Claims

1. An impression tray (10, 16) of plastics material for dental purposes, including a shovel-like blade which at least at certain portions of its inside is provided with a layer (11) of thread-shaped anchoring means in the form of a mat consisting of uniformly distributed filaments (12; 25) attached to the tray (10; 16) at points positioned closely together on the inside of the tray (10; 16), said filaments (12; 25) having a stiffness such that they can penetrate into impression material (19), which is to be put in the tray (10; 16) in a semi-liquid or plastic condition for taking an impression of a lower or upper jaw by pressing the tray (10; 16) with the impression material (19) against the respective jaw and which is of the kind that is allowed to solidify before removing it together with the tray (10; 16), such that the filaments (12; 25) will be incorporated as effective anchoring means in the bottom layer of the impression material (19), characterized in that the filaments (12; 25) of the anchoring layer (11) are non-woven and are distributed in all directions to form a porous anchoring felt mat.

2. Tray as claimed in claim 1, characterized in that the anchoring means comprises fibrous elements (12) which are very thin in relation to their length and the bottom side of which is attached to the inside of the tray (10; 16).

3. Tray as claimed in claim 2, characterized in that the filament layer (11) has a thickness of at most about 4 mm, preferably in the range of one to three millimeters.

4. Tray as claimed in claim 3, characterized in that the filaments (12; 25) form an aery three-dimensional arrangement by the filaments crossing each other in different directions and being mutually attached at the intersection points (13; 26) in a manner known per se from different types of gas filters.

5. Tray as claimed in any of the claims 1—4, characterized in that the filaments (12; 25) are secured to the tray (10; 16) by a binding agent.

6. Tray as claimed in any of the claims 1—4, characterized in that the filaments (12; 25) are secured to the tray (10; 16) by pressing them directly onto the hot tray (10; 16).

## Patentansprüche

1. Aus Kunststoff bestehender schaufelartiger Abdrucklöffel für die Zahnbehandlung, der mindestens an einigen Stellen seiner Innenseite eine Schicht (11) eines fasrigen Haftmittels in Gestalt einer Matte aufweist, die aus gleichmäßig verteilten Fasern (12, 25) besteht, die an der Innenseite des Abdrucklöffels (10, 16) dicht nebeneinander liegend mit diesem verbunden sind und eine ausreichende Steifigkeit aufweisen, um in die Abdruckmassen (19) eindringen zu können, die im halbflüssigem oder plastischem Zustand zum Zweck der Abnahme eines Unter- oder Oberkieferabdrucks in den Abdrucklöffel (10, 16) gebracht wird und so beschaffen ist, daß sie erhärtet, ehe sie zusammen mit dem Abdrucklöffel (10, 16) aus dem Mund entfernt wird, so daß die Fasern (12, 25) sichere Verankerungsmittel in der Unterseite der Abdruckmasse (19) bilden, dadurch gekennzeichnet, daß die Fasern (12, 25) der Verankerungsschicht (11) kein Gewebe bilden und zur Bildung einer porösen filzartigen Matte sich nach allen Richtungen erstreckend verteilt sind.

2. Abdrucklöffel nach Anspruch 1, dadurch gekennzeichnet, daß die Verankerungsmittel aus im Verhältnis zu ihrer Länge sehr dünnen faserigen Elementen (12) bestehen und mit ihrer Unterseite mit der Innenseite des Abdrucklöffels (10, 16) verbunden sind.

3. Abdrucklöffel nach Anspruch 2, dadurch gekennzeichnet, daß die Faserschicht (11) eine Dicke von höchstens 4 mm, vorzugsweise eine Dicke von 1 bis 3 m aufweist.

4. Abdrucklöffel nach Anspruch 3, dadurch gekennzeichnet, daß die Fasern (12, 25) ein dreidimensionales poröses Netzwerk mit sich in beliebigen Richtungen kreuzenden und an den Kreuzungspunkten (13, 26) in einer von der Herstellung von Gasfiltern an sich bekannten Weise miteinander verbundenen Fasern (12, 25) bilden.

5. Abdrucklöffel nach einem der Ansprüche 1 bis 4, dadurch gekennzeichnet, daß die Fasern (12, 25) an dem Abdrucklöffel (10, 16) mittels eines Bindemittels befestigt sind.

6. Abdrucklöffel nach einem der Ansprüche 1 bis 4, dadurch gekennzeichnet, daß die Fasern (12, 25) durch unmittelbares Einpressen in den heißen Kunststoff des Abdrucklöffels (10, 16) mit diesem verbunden sind.

**Revendications**

1. Porte-empreinte (10; 16) en matière plastique, pour applications dentaires, comprenant une lame en forme de pelle qui, en certaines parties au moins de son intérieur, est munie d'une couche (11) de moyens d'ancrage filiformes se présentant sous la forme d'un mat constitué de filaments (12; 25) uniformément répartis et attachés au porte-empreinte (11; 16) en des points situés les uns près des autres sur l'intérieur du porte-empreinte (10; 16), lesdits filaments (12; 25) ayant une raideur telle qu'ils puissent pénétrer dans la matière d'empreinte (19) que l'on doit mettre dans le porte-empreinte (11; 16) à l'état semi-liquide ou plastique, pour prendre une empreinte d'une mâchoire inférieure ou supérieure en pressant le porte-empreinte (11; 16) avec la matière d'empreinte (19) contre la mâchoire correspondante, et qui est du type qu'on laisse se solidifier avant de l'enlever avec le porte-empreinte (11; 16), de façon telle que les filaments (12; 25) soient incorporés en tant que moyens d'ancrage effectifs dans la couche de fond de la matière d'empreinte (19), caractérisé en ce que les filaments (12; 25) de la couche d'ancrage (11) sont non-tissés et sont répartis dans toutes les directions pour former un mat en feutre d'ancrage poreux.

2. Porte-empreinte selon la revendication 1, caractérisé en ce que les moyens d'ancrage comprennent des éléments fibreux (12) qui sont très minces par rapport à leur longueur et dont le côté de fond est attaché à l'intérieur du porte-empreinte (10; 16).

3. Porte-empreinte selon la revendication 2, caractérisé en ce que la couche de filaments (11) a une épaisseur au plus égale à 4 mm environ, de préférence comprise entre un et trois millimètres.

4. Porte-empreinte selon la revendication 3, caractérisé en ce que les filaments (12; 25) forment une structure lâche à trois dimensions, du fait que les filaments se croisent les uns les autres en des directions différentes et sont attachés mutuellement aux points d'intersection (13; 26) d'une manière connue en soi pour différents types de filtres à gaz.

5. Porte-empreinte selon l'une quelconque des revendications 1 à 4, caractérisé en ce que les filaments (12; 25) sont fixés au porte-empreinte (10; 16) par un liant.

6. Porte-empreinte selon l'une quelconque des revendications 1 à 4, caractérisé en ce que les filaments (12; 25) sont fixés au porte-empreinte (10; 16) en étant pressés directement sur le porte-empreinte (10; 16) chaud.

0 096 020

FIG. 1

11

10

FIG. 2

11

10

FIG.3

14    13    12    11

15

10

FIG.4

14    13    12    11

15

10

1

FIG. 5

17

18

17

16

FIG.6

17

26

25

19

16